(19) Europäisches Patentamt
European Patent Office
Office européen des brevets

(11) Veröffentlichungsnummer: **0 010 060**
**B2**

# (12) NEUE EUROPÄISCHE PATENTSCHRIFT

(45) Veröffentlichungstag der neuen Patentschrift: **08.08.84**

(51) Int. Cl.³: **C 08 L 63/02**, C 08 K 3/34

(21) Anmeldenummer: **79810091.3**

(22) Anmeldetag: **12.09.79**

(54) **Epoxidformmasse.**

(30) Priorität: **18.09.78 CH 9724/78**

(43) Veröffentlichungstag der Anmeldung:
**16.04.80 Patentblatt 80/8**

(45) Bekanntmachung des Hinweises auf die Patenterteilung:
**10.02.82 Patentblatt 82/6**

(45) Bekanntmachung des Hinweises auf die Entscheidung über den Einspruch:
**08.08.84 Patentblatt 84/32**

(84) Benannte Vertragsstaaten:
**AT BE DE FR GB IT NL SE**

(56) Entgegenhaltungen:
**FR - A - 2 141 897**
**US - A - 3 218 288**
**US - A - 3 547 871**

**CHEMICAL ABSTRACTS, vol. 82, 1975, Seite 32, Zusammenfassung 5040r. Columbus, Ohio, USA**
**Charles Harper, Electronic Packaging with Resins, New York 1961**

(73) Patentinhaber: **CIBA-GEIGY AG, Postfach, CH-4002 Basel (CH)**

(72) Erfinder: **Schreiber, Bruno, Dr., Herrenweg 8, CH-4147 Aesch (CH)**

(74) Vertreter: **Zumstein, Fritz jun., Dr. et al, Dr. F. Zumstein sen. Dr. E. Assmann Dr. R. Koenigsberger Dipl.-Ing. F. Klingseisen Dr. F. Zumstein jun. Bräuhausstrasse 4, D-8000 München 2 (DE)**

**EP 0 010 060 B2**

**Beschreibung**

Gegenstand vorliegender Erfindung ist eine gefüllte, härtbare Formmasse auf der Basis von festen Bisphenol-A-Epoxidharzen, festen Dicarbonsäureanhydridhärtern und überwiegend Wollastonit als Füllstoff.

Epoxidformmassen haben zwischenzeitlich auf Grund ihrer guten Eigenschaften vielfältige Verwendung in der Technik gefunden. Aus wirtschaftlichen und verarbeitungstechnischen Gründen sind oft feste rieselfähige und lagerbeständige Epoxidformmassen gewünscht. Je nach Wahl der Grundbestandteile Harz und Härter ergibt sich hierbei eine besondere Eignung für bestimmte Anwendungszwecke. Weitere Abwandlungen werden dann oft durch den Zusatz von Zuschlagstoffen vorgenommen, wodurch eine Verbesserung von mechanischen und elektrischen Eigenschaften sowie der Verarbeitungseigenschaften erzielt wird. Mit solchen Zuschlagstoffen kann die Härtung der Formmassen wesentlich beeinflußt werden, was oft nachteilig ist. Zum Beispiel können basische Zuschlagstoffe bei der Anhydridhärtung die Reaktivität so vermindern, daß die Herstellung von Formkörpern nicht mehr möglich ist. Eine schnelle Härtung kann allerdings die Rißbildung in den Formteilen begünstigen.

Epoxidformmassen haben in der Elektrotechnik eine besondere Bedeutung erlangt, da sie die gestellten Anforderungen allgemein erfüllen. Die Rißbeständigkeit von Formteilen aus gefüllten Epoxidformmassen, besonders bei umhüllten Schwermetallteilen, wird in der Praxis noch als ungenügend empfunden. Eine hohe Rißbeständigkeit ist aber für eine dauerhafte Schutzfunktion der Umhüllung Voraussetzung. Die Rißbildung kann bei oder nach der Entformung bzw. Abkühlung, Lagerung oder Gebrauch der Formteile auftreten.

Aufgabe vorliegender Erfindung ist es, eine feste, leicht verarbeitbare und schnell härtende Epoxidformmasse bereitzustellen, aus denen Formteile mit hoher Rißbeständigkeit und guten mechanischen Eigenschaften hergestellt werden können.

Gegenstand vorliegender Erfindung ist eine Epoxidformmasse aus

a) einem bei Raumtemperatur festen Epoxidharz mit mehr als 1,0 Epoxidäquivalenten pro kg Epoxidharz auf der Basis von Diglycidyläthern der Bisphenole,
b) einem festen Anhydrid einer carbocyclischen 1,2-Dicarbonsäure als Härter in einer Menge, daß auf eine Epoxidgruppe 0,5 bis 1,5 Anhydridgruppen entfallen und
c) einem oder mehreren Füllstoffen in einer Menge zwischen 50 und 80 Gew.-%, bezogen auf die Formmasse, dadurch gekennzeichnet, daß sie
d) als Füllstoff mindestens die Hälfte der Gesamtfüllstoffmenge an Wollastonit enthält.

Die Epoxidharze auf Basis von Bisphenoldiglycidyläther sind schon lange bekannt. Es handelt sich hierbei um die Glycidylierungsprodukte von Bisphenolen, die reine und oligomere Diglycidyläther und Gemische dieser Äther umfassen. Geeignete Bisphenole können der Formel

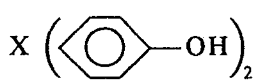

entsprechen, worin X gleich O, S, Alkyliden, Cycloalkyliden, Alkylen oder eine direkte Bindung dargestellt. Beispiele sind Äthyliden, Propyliden, Butyliden, Pentyliden, Hexyliden, Monochlor-, Dichlor- oder Trichloräthyliden, Cyclohexyliden, Methylen, Äthylen, Phenylmethylen, oder Diphenylmethylen. Bevorzugt sind Bisphenol-F, Bisphenol-C und besonders Bisphenol-A. Weitere geeignete Phenole sind Phenol- oder Kresolnovolacke. Das Epoxidharz hat vorzugsweise ein Epoxidäquivalent pro kg Harz zwischen 1,0 bis 2,5, besonders 1,5 und 2,0 und es erweicht vorzugsweise erst über 50° C. Bisphenoldiglycidyläther können auch in Form von Addukten eingesetzt werden, z. B. mit Polyaminen oder Polycarbonsäuren. Sie können auch mit geringen Mengen, z. B. bis zu 20 Gew.-% anderen Epoxidharzen abgemischt werden, z. B. Polyglycidyläther, Polyglycidylester, Glycidylverbindungen auf der Basis von Hydantoin oder Glycidylisocyanurat. Zur flammwidrigen Ausrüstung können auch halogenhaltige Epoxidharze auf der Basis von z. B. Glycidyläthern des Tetrachlor- oder Tetrabrombisphenol-A verwendet werden.

Als Härter können ein oder mehrere carbocyclische 1,2-Dicarbonsäureanhydride verwendet werden. Für eine ausreichende Lagerbeständigkeit sollen die Anhydride relativ hydrolysestabil sein. Als geeignete Anhydride carbocyclischer 1,2-Dicarbonsäuren haben sich solche erwiesen, die 5 oder 6 Ringkohlenstoffatome enthalten. Beispiele sind Tetrahydrophthalsäure-, Hexahydrophthalsäure- und Tetrachlorphthalsäureanhydrid. Die Härter können auch in Form von Schmelzen in Polyolen, z. B. in Kresolnovolacken, eingesetzt werden.

Werden Gemische verschiedener Anhydride eingesetzt, so kann es vorteilhaft sein, daß eines davon in Form eines Adduktes zugegeben wird. Das Gehalt an Härter wird vorzugsweise so eingestellt, daß auf eine Epoxidgruppe 0,6 bis 0,9 Anhydridgruppen entfallen.

Das als Füllstoff verwendete Wollastonit ist ein natürlich vorkommendes und käufliches natürliches Kalziummetasilikat, dessen wäßriger Auszug (24 h) basisch reagiert. Dieser Füllstoff macht vorzugsweise mindestens zwei Drittel, besonders mindestens drei Viertel der Gesamtfüllstoffmenge aus und kann auch alleine als Füllstoff eingesetzt werden.

Geeignete Füllstoffe, die neben Wollastonit enthalten sein können, sind z. B. Textilfasern, Glasfasern, Asbestfasern, Borfasern, Kohlenstoffasern, Glaspulver, Glaskugeln, Quarzmehl, Quarzgutmehl (kristallin-amorphes Quarzmehl); Mineralische Silikate wie Glimmer, Asbestmehl, Schiefermehl; Kaolin, Aluminiumoxidtrihydrat, Kreidemehl, Gips, Antimontrioxid, Bentone, Kieselsäurerogel (Aerosile), Lithopone, Schwerspat, Titandioxid, Ruß, Graphit, Oxidpigmente, z. B. Eisenoxid, oder Metallpulver wie Aluminium- oder Eisenpulver. Für Anwendungen in der Elektrotechnik sollen Stromleitende Füllstoffe vermieden werden.

In einer bevorzugten Formmasse sind 50 bis 70 Gew.-% Wollastonit und bis zu 20 Gew.-% eines weiteren Füllstoffes enthalten, besonders Glasfasern.

Die erfindungsgemäßen Epoxidformmassen können vor der Härtung in irgend einer Phase mit üblichen Modifizierungsmitteln außer den Füllstoffen versetzt werden, z. B. Farbstoffen, Pigmenten, Härtungsbeschleunigern, Weichmachern, Verlaufmitteln, Thioxotropiermitteln, Formtrennmitteln, Haftvermittlern zwischen Füllstoffen und Harz, flammhemmenden Stoffen wie organischen Halogenverbindungen mit oder ohne Antimontrioxid, und auch anderen Kunstharzen wie Phenoplasten und Aminoplasten.

Die Herstellung der erfindungsgemäßen Epoxidformmassen kann in üblicher Weise mit Hilfe bekannter Mischaggregate (z. B. Rührer, Kneter, Walzen, Mühlen) erfolgen. So kann man z. B. die Einzelkomponenten, gegebenenfalls nach vorherigem Mahlen intensiv miteinander vermischen (Trokkenverfahren). Die Vermischung kann aber auch in einem Kneter erfolgen, wobei man ein Granulat erhält.

Die festen erfindungsgemäßen Epoxidformmassen können nach üblichen Verfahren unter Aushärtung zu Formteilen aller Art verarbeitet werden. Die Härtungstemperatur liegt hierbei im allgemeinen zwischen 50 und 200°C, vorzugsweise 100 bis 180°C. Besonders geeignet ist die Formmasse zur Verarbeitung nach Preßverfahren. Die Formmassen dienen zur Herstellung hochwertiger Formteile, insbesondere auf dem Gebiet der Elektrotechnik. Mit diesen Formmassen können z. B. problemlos Metallteile umhüllt werden.

Die erfindungsgemäßen Epoxidformmassen stellen rieselfähige, gut lagerstabile, und überraschend schnell härtende Formmassen dar, die problemlos verarbeitbar sind. Formteile daraus weisen gute mechanische Eigenschaften und eine außerordentlich hohe Rißbeständigkeit auf.

Die nachfolgenden Beispiele erläutern die Erfindung näher.

## Beispiele 1—4
## und Vergleichsbeispiele

800 g eines festen Bisphenol-A-Epoxidharzes (1,7 Epoxidäquivalente pro kg, Schmelzpunkt nach Kofler 74° C), 800 g eines Härters A, erhalten durch Vermischen (15 h) von 350 g Tetrachlorphthalsäureanhydrid, 50 g eines festen Adduktes aus je 50 Gew.-% Hexahydrophthalsäureanhydrid und Kresolnovolak sowie 600 g Naturwollastonit in einer 5 l-Kugelmühle, 2336 g Naturwollastonit, 44 g Zinkstearat und 20 g Gasruß werden in einem Laborschnellmischer eingewogen und 2 min bei einer Drehzahl von 1400 c/min homogenisiert. Diese Vormischung wird in einen Labor-Ko-Kneter bei 100° C Zylindertemperatur verschmolzen und geknetet. Die austretende Masse wird abgekühlt und zu einem Granulat vermahlen. Aus dieser Formmasse werden die Prüfkörper durch Preßformen bei 170° C Formtemperatur und einer Härtungszeit von 10 min, hergestellt.

Die in den Beispielen 3 und 4 verwendeten Härter B bzw. C werden erhalten:

Härter B: 35 Gew.-% Tetrachlorphthalsäureanhydrid werden mit 3 Gew.-% Hexahydrophthalsäureanhydrid, 2 Gew.-% Novolak und 60 Gew.-% Quarzmehl in einer Kugelmühle 5 h gemahlen.

Härter C: In Härter C wird anstelle von Hexahydrophthalsäureanhydrid Tetrahydrophthalsäureanhydrid verwendet.

Die Biegefestigkeit (DIN 53 452) und Wärmeformbeständigkeit nach Martens (DIN 53 458) werden an Prüfstäben der Abmessung 10 × 15 × 120 mm bestimmt.

Die Beständigkeit gegen Rißbildung wird folgendermaßen bestimmt:

Zwei mit Methylenchlorid entfettete Stahlplättchen (Abmessung 4 × 30 × 60 mm) werden zunächst in der 170°C heißen Preßform vorgewärmt. Danach wird im Spritzpreßverfahren zunächst eine Seite mit einer 1,5 mm dicken und dann von der anderen Seite mit einem 2,5 mm dicken Formmassenschicht umhüllt. Die Formmasse wird in Form von 60 g bis 70 g schweren Tabletten eingesetzt. Der umhüllte Formkörper ist so gestaltet, daß an gegenüberliegenden Seite je zwei durch Epoxidharz getrennte Ecken des Metallplättchens nicht umhüllt sind. Die Preßzeit beträgt 3 min, wonach die Prüfkörper auf Raumtemperatur abgekühlt werden.

Die Klassifizierung der Rißbeständigkeit ergibt sich aus Abkühlungstests, die in nachfolgender Tabelle 1 zusammengefaßt sind.

Tabelle 1

| | |
|---|---|
| Reißt innerhalb 1 h nach Entformung | 5 |
| Reißt innerhalb 4 h | 4 |
| Reißt innerhalb 24 h | 3 |
| Reißt beim Abkühlen von Raumtemperatur auf 0° C im Eiswasser (1/2 h) | 2 A |
| Reißt nach 1/2 h Erwärmen bei 100° C und Abkühlen auf 0° C im Eiswasser (1/2 h) | 2 B |
| Reißt nach Abkühlen von Raumtemperatur auf —20° C (1/4 h in Alkohol/Trockenreis) | 1 A |
| Reißt nach Abkühlen von Raumtemperatur auf —40° C (1/4 h in Alkohol/Trockeneis) | 1 B |
| Keine Risse nach allen Schockstufen | 0 |

Die Prüfergebnisse sind in der nachfolgenden Tabelle 2 zusammengefaßt. Die Prüfkörper für Beispiel 2 und die Vergleichsbeispiele werden gemäß Beispiel 1 erhalten.

Tabelle 2

| Zusammensetzung (Gew.-%) und Prüfresultate | Beispiel 1 | 2 | 3 | 4 | Vergleichsbeispiel | Vergleichsbeispiel |
|---|---|---|---|---|---|---|
| Epoxidharz | 20 | 20 | 21,5 | 21 | 20 | 20 |
| Härter A | 20 | 20 | — | — | 20 | 20 |
| Härter B | — | — | 21,3 | — | — | — |
| Härter C | — | — | — | 21 | — | — |
| Naturwollastonit | 58,4 | 47,4 | 44,5 | 56,3 | — | — |
| Quarzmehl | — | — | — | — | 58,4 | 47,4 |
| Glasfasern | — | 11 | 11,0 | — | — | 11 |
| Zinkstearat | 1,1 | 1,1 | 1,1 | 1,3 | 1,1 | 1,1 |
| Gasruß | 0,5 | 0,5 | 0,4 | 0,4 | 0,5 | 0,5 |
| Beständigkeit gegen Rißbildung | 0 | 0 | 0 | 0 | 3 | 1 A |
| Biegefestigkeit ($N/mm^2$) | 147,2 | 162,1 | 150 | 139 | 153,7 | 161,5 |
| Formbeständigkeit nach Martens (° C) | 98 | 99 | 98 | 95 | 101 | 93 |

**Patentansprüche**

1. Epoxidformmasse aus

a) einem bei Raumtemperatur festen Epoxidharz mit mehr als 1,0 Epoxidäquivalenten pro kg Epoxidharz auf der Basis von Diglycidyläthern der Bisphenole,

b) einem festen Anhydrid einer carbocyclischen 1,2-Dicarbonsäure als Härter in einer Menge, daß auf eine Epoxidgruppe 0,5 bis 1,5 Anhydridgruppen entfallen und

c) einem oder mehreren Füllstoffen in einer Menge zwischen 50 und 80 Gew.-%, bezogen auf die Formmasse,

dadurch gekennzeichnet, daß sie

d) als Füllstoff mindestens die Hälfte der Gesamtfüllstoffmenge an Wollastonit enthält.

2. Formmasse gemäß Anspruch 1, dadurch gekennzeichnet, daß der Härter Tetrahydrophthalsäure-, Hexahydrophthalsäure- oder Tetrachlorphthalsäureanhydrid oder eine der Mischungen dieser Anhydride ist.
3. Formmasse gemäß Anspruch 1, dadurch gekennzeichnet, daß mindestens zwei Drittel, vorzugsweise mindestens drei Viertel, der Gesamtfüllstoffmenge Wollastonit sind.
4. Formkörper aus gehärteten Epoxidformmassen gemäß Anspruch 1.
5. Formkörper gemäß Anspruch 4, die aus einem Metallteil und der dieses Metallteil umhüllenden gehärteten Epoxidformmasse bestehen.
6. Verwendung von Epoxidformmassen gemäß Anspruch 1 zur Herstellung von Formkörpern durch Härten bei höheren Temperaturen, insbesondere zur Umhüllung von Metallteilen.

**Claims**

1. An epoxy resin moulding composition consisting of

a) an epoxy resin which is solid at room temperature and contains more than 1 epoxide equivalent per kg of epoxy resin based on diglycidyl ethers of bisphenols,
b) a solid anhydride of a carbocyclic 1,2-dicarboxylic acid as hardener in an amount such that the number of anhydride groups per epoxy group is 0.5 to 1.5, and
c) one or more fillers in an amount from 50 to 80% by weight, based on the moulding composition, wherein at least half the total amount of filler is wollastonite.

2. A moulding composition according to claim 1, wherein the hardener is tetrahydrophthalic, hexahydrophthalic or tetrachlorophthalic anhydride or one of the mixtures of these anhydrides.
3. A moulding composition according to claim 1, wherein at least two thirds, preferably at least three quarters, of the total amount of filler is wollastonite.
4. A moulding made from an epoxy moulding composition according to claim 1.
5. A moulding according to claim 4, which consists of a metal component and of the cured epoxy moulding compositions encasing said metal component.
6. The use of an epoxy moulding composition according to claim 1 for the production of moulding by curing at elevated temperatures, in particular for encasing metal components.

**Revendications**

1. Matière à mouler époxydique constituée:

a) d'une résine époxydique solide à la température ambiante comportant plus de 1,0 équivalent d'époxy par kg de résine époxydique, à base d'éthers diglycidyliques de bis-phénols,
b) d'un anhydride solide d'acide dicarboxylique-1,2 carboxy-clique, en tant que durcisseur, en une quantité telle qu'il y ait de 0,5 à 1,5 groupe anhydride par groupe époxy et
c) d'une ou plusieurs charges en une quantité comprise entre 50 et 80% en poids par rapport à la matière à mouler,

matière à mouler caractérisée en ce qu'elle contient:

d) comme charge une quantité de wollastonite représentant au moins la moitié de la quantité de charge totale.

2. Matière à mouler selon la revendication 1, caractérisée en ce que le durcisseur est l'anhydride tétrahydrophtalique, hexahydrophtalique ou tétrachlorophtalique ou un mélange de ces anhydrides.
3. Matières à mouler selon la revendication 1, caractérisées en se que la wollastonite représente au moins deux tiers, de préference au moins trois quart de la quantité de charge totale.
4. Objets moulés en matières à mouler époxydiques selon la revendication 1 durcies.
5. Objets moulés selon la revendication 4, qui sont constitués d'une partie métallique et d'une matière à mouler époxydique durcie enrobant cette partie métallique.

6. Application des matières à mouler époxydiques selon la revendication 1, à la fabrication d'objets moulés par durcissement à des températures assez élevées, plus, spécialement pour l'enrobage de pièces métalliques.